# EUROPEAN PATENT APPLICATION

(11) **EP 1 211 534 A2**
(43) Date of publication of application: **05.06.2002**
(21) Application number: 01000648.4
(22) Date of filing: 21.11.2001
(51) Int. Cl.: G02B 6/293, G02B 6/26, G02B 5/09

(54) **Micromirror wavelength equalizer**

(30) Priority: 30.11.2000 US 250520 P
(71) Applicant: Texas Instruments Incorporated, Dallas, Texas 75251 (US)
(72) Inventor: Tew, Claude E., Dallas, TX 75082 (US)
(74) Representative: Holt, Michael

(57) **Abstract**

A wavelength equalizer and method. The wavelength equalizer comprises an input waveguide (302), an output waveguide (322), a wavelength separation device (310), and a micromirror array (314). The wavelength separation device (310) divides the input beam of light into sub-beams. A first sub-array of the micromirrors in the micromirror array (314) are operable between a first and second position. The first position directing light in the sub-beam to the output waveguide (322), and the second position excluding the light in the sub-beam from the output waveguide (322). The method of equalizing a plurality of components of an optical input signal comprises: separating the components, directing each component to a sub-array of a micromirror array, positioning micromirrors in each sub-array such that micromirrors in a first position direct incident light to an output waveguide and micromirrors in a second position do not, and combining the sub-beams into an output beam of light.

## Description

### TECHNICAL FIELD OF THE INVENTION

This invention relates to the field of optical systems, particularly to fiber optic communication systems.

### BACKGROUND OF THE INVENTION

Modulated light beams carry information in fiber optic communication systems. A single fiber carries several light beams, and therefore several separate information streams. Each light beam in the fiber has a unique wavelength. When necessary, the light beams are separated by wavelength and routed to their particular destination. Through the course of the network, various wavelengths come from different sources and along different paths. This typically results in the different wavelengths having different amplitudes.

When the various amplitudes have different wavelengths, optical amplification is difficult. An unequalized signal passing through an optical amplifier remains unequalized. The disparity between the various signals can become even worse upon amplification. EFDA are the amplifier of choice because they have gain across the entire spectrum of interest. When amplified by an EFDA, the stronger signals in the unequalized source are spontaneously matched/amplified, robbing from the weaker signals.

When unequalized signals pass through cascaded amplifiers, the equalization problem cascades as well. The worst case result is that the weaker signals become weaker and weaker until the information in the weak signals is not recoverable. What is needed it a method of equalizing the signal strength between the various wavelengths in an optical fiber.

### SUMMARY OF THE INVENTION

The present invention provides a method and system for wavelength equalization. One embodiment of invention provides a wavelength equalizer that comprises an input waveguide, an output waveguide, a wavelength separation device, and a micromirror array. The wavelength separation device divides the input beam of light into sub-beams. A first sub-array of the micromirrors in the micromirror array are operable between a first and second position. The first position directing light in the sub-beam to the output waveguide, and the second position excluding the light in the sub-beam from the output waveguide.

According to another embodiment of the wavelength equalizer, a method of equalizing a plurality of components of an optical input signal is provided. The method comprises: separating the components, directing each component to a sub-array of a micromirror array, positioning micromirrors in each sub-array such that micromirrors in a first position direct incident light to an output waveguide and micromirrors in a second position do not, and combining the sub-beams into an output beam of light.

### BRIEF DESCRIPTION OF THE DRAWINGS

For a more complete understanding of the present invention reference is now made to the following descriptions taken in conjunction with the accompanying drawings, in which:
FIGURE 1 is a perspective view of a small portion of a micromirror array of the prior art;
FIGURE 2 is an exploded perspective view of a single micromirror element from the micromirror array of Figure 1.;
FIGURE 3 is a schematic view of a wavelength equalizer;
FIGURE 4 is a schematic view a wavelength equalizer that uses a detector to sense the strength of the input signals;
FIGURE 5 is a schematic view of a wavelength equalizer that operates without the use of a fixed mirror;
FIGURE 6 is a schematic view of a wavelength equalizer similar to that of Figure 5, using both a detector and a light trap;
FIGURE 7 is a schematic view of a wavelength equalizer that does not require a circulator or other light separation device;
FIGURE 8 is a schematic view of a wavelength equalizer using a retro-reflector and two groups of mirror elements and having an output power monitor; and
FIGURE 9 is a schematic view of a wavelength equalizer using a retro-reflector and two groups of mirror elements and having an output power monitor.

### DETAILED DESCRIPTION OF PREFERRED EMBODIMENTS

A micromirror wavelength equalizer has been developed that allows each signal in a DWDM fiber optic communication system to be individually attenuated. By adjusting the attenuation of each component signal, the composite signal is equalized allowing simple amplification of the signal.

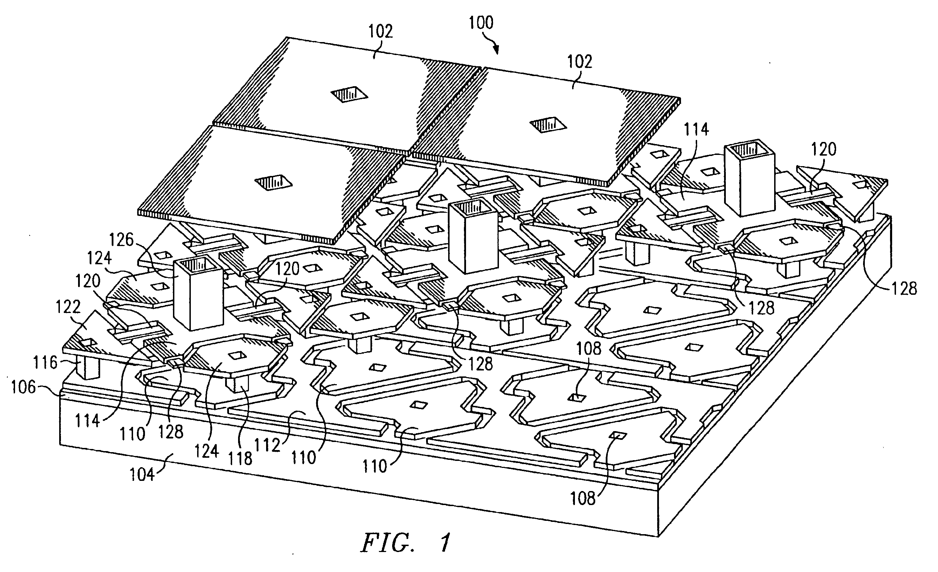

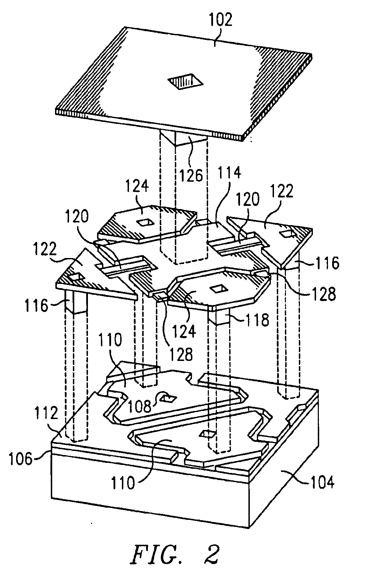

The equalizer described below typically uses a micromirror device to attenuate portions of the device. A typical hidden-hinge micromirror 100 is actually an orthogonal array of micromirror cells, or elements. This array often includes more than a thousand rows and columns of micromirrors. Figure 1 shows a small portion of a micromirror array of the prior art with several mirrors 102 removed to show the underlying mechanical structure of the micromirror array. Figure 2 is an exploded view of a single micromirror element of the prior art further detailing the relationships between the micromirror structures.

A micromirror is fabricated on a semiconductor, typically silicon, substrate 104. Electrical control circuitry is typically fabricated in or on the surface of the semiconductor substrate 104 using standard integrated circuit process flows. This circuitry typically includes, but is not limited to, a memory cell associated with, and typically underlying, each mirror 102 and digital logic circuits to control the transfer of the digital image data to the underlying memory cells. Voltage driver circuits to drive bias and reset signals to the mirror superstructure may also be fabricated on the micromirror substrate, or may be external to the micromirror. Image processing and formatting logic is also formed in the substrate 104 of some designs. For the purposes of this disclosure, addressing circuitry is considered to include any circuitry, including direct voltage connections and shared memory cells, used to control the direction of rotation of a micromirror.

Some micromirror configurations use a split reset configuration which allows several micromirror elements to share one memory cell--thus reducing the number of memory cells necessary to operate a very large array, and making more room available for voltage driver and image processing circuitry on the micromirror integrated circuit. Split reset is enabled by the bistable operation of a micromirror, which allows the contents of the underlying memory to change without affecting the position of the mirror 102 when the mirror has a bias voltage applied.

The silicon substrate 104 and any necessary metal interconnection layers are isolated from the micromirror superstructure by an insulating layer 106 which is typically a deposited silicon dioxide layer on which the micromirror superstructure is formed. Holes, or vias, are opened in the oxide layer to allow electrical connection of the micromirror superstructure with the electronic circuitry formed in the substrate 104.

The first layer of the superstructure is a metalization layer, typically the third metalization layer and therefore often called M3. The first two metalization layers are typically required to interconnect the circuitry fabricated on the substrate. The third metalization layer is deposited on the insulating layer and patterned to form address electrodes 110 and a mirror bias connection 112. Some micromirror designs have landing electrodes which are separate and distinct structures but are electrically connects to the mirror bias connection 112. Landing electrodes limit the rotation of the mirror 102 and prevent the rotated mirror 102 or hinge yoke 114 from touching the address electrodes 110, which have a voltage potential relative to the mirror 102. If the mirror 102 contacts the address electrodes 110, the resulting short circuit could fuse the torsion hinges 116 or weld the mirror 102 to the address electrodes 110, in either case ruining the micromirror.

Since the same voltage is always applied both to the landing electrodes and the mirrors 102, the mirror bias connection and the landing electrodes are preferably combined in a single structure when possible. The landing electrodes are combined with the mirror bias connection 112 by including regions on the mirror bias/reset connection 112, called landing sites, which mechanically limit the rotation of the mirror 102 by contacting either the mirror 102 or the torsion hinge yoke 114. These landing sites are often coated with a material chosen to reduce the tendency of the mirror 102 and torsion hinge yoke 114 to stick to the landing site.

Mirror bias/reset voltages travel to each mirror 102 through a combination of paths using both the mirror bias/reset metalization 112 and the mirrors and torsion beams of adjacent mirror elements. Split reset designs require the array of mirrors to be subdivided into multiple subarrays each having an independent mirror bias connection. The landing electrode/mirror bias 112 configuration shown in Figure 1 is ideally suited to split reset applications since the micromirror elements are easily segregated into electrically isolated rows or columns simply by isolating the mirror bias/reset layer between the subarrays. The mirror bias/reset layer of Figure 1 is shown divided into rows of isolated elements.

A first layer of supports, typically called spacervias, is fabricated on the metal layer forming the address electrodes 110 and mirror bias connections 112. These spacervias, which include both hinge support spacervias 116 and upper address electrode spacervias 118, are typically formed by spinning a thin spacer layer over the address electrodes 110 and mirror bias connections 112. This thin spacer layer is typically a 1 µm thick layer of positive photoresist. After the photoresist layer is deposited, it is exposed, patterned, and deep UV hardened to form holes in which the spacervias will be formed. This spacer layer and a thicker spacer layer used later in the fabrication process are often called sacrificial layers since they are used only as forms during the fabrication process and are removed from the device prior to device operation.

A thin layer of metal is sputtered onto the spacer layer and into the holes. An oxide is then deposited over the thin metal layer and patterned to form an etch mask over the regions that later will form hinges 120. A thicker layer of metal, typically an aluminum alloy, is sputtered over the thin layer and oxide etch masks. Another layer of oxide is deposited and patterned to define the hinge yoke 114, hinge cap 122, and the upper address electrodes 124. After this second oxide layer is patterned, the two metals layers are etched simultaneously and the oxide etch stops removed to leave thick rigid hinge yokes 114, hinge caps 122, and upper address electrodes 124, and thin flexible torsion beams 120.

A thick spacer layer is then deposited over the thick metal layer and patterned to define holes in which mirror support spacervias 126 will be formed. The thick spacer layer is typically a 2 µm thick layer of positive photoresist. A layer of mirror metal, typically an aluminum alloy, is sputtered on the surface of the thick spacer layer and into the holes in the thick spacer layer. This metal layer is then patterned to form the mirrors 102 and both spacer layers are removed using a plasma etch.

Once the two spacer layers have been removed, the mirror is free to rotate about the axis formed by the torsion hinge. Electrostatic attraction between an address electrode 110 and a deflectable rigid member, which in effect form the two plates of an air gap capacitor, is used to rotate the mirror structure. Depending on the design of the micromirror device, the deflectable rigid member is the torsion beam yoke 114, the beam or mirror 102, a beam attached directly to the torsion hinges, or a combination thereof. The upper address electrodes 124 also electrostatically attract the deflectable rigid member.

The force created by the voltage potential is a function of the reciprocal of the distance between the two plates. As the rigid member rotates due to the electrostatic torque, the torsion beam hinges resist deformation with a restoring torque which is an approximately linear function of the angular deflection of the torsion beams. The structure rotates until the restoring torsion beam torque equals the electrostatic torque or until the rotation is mechanically blocked by contact between the rotating structure and a fixed component. As discussed below, most micromirror devices are operated in a digital mode wherein sufficiently large bias voltages are used to ensure full deflection of the micromirror superstructure.

Micromirror devices are generally operated in one of two modes of operation. The first mode of operation is an analog mode, sometimes called beam steering, wherein the address electrode is charged to a voltage corresponding to the desired deflection of the mirror. Light striking the micromirror device is reflected by the mirror at an angle determined by the deflection of the mirror. Depending on the voltage applied to the address electrode, the cone of light reflected by an individual mirror is directed to fall outside the aperture of an optical system, partially within the aperture, or completely within the aperture.

The second mode of operation is a digital mode. When operated digitally, each micromirror is fully deflected in either of the two directions about the torsion beam axis. Digital operation uses a relatively large voltage to ensure the mirror is fully deflected. Since it is advantageous to drive the address electrode using standard logic voltage levels, a bias voltage, typically a negative voltage, is applied to the mirror metal layer to increase the voltage difference between the address electrodes and the mirrors. Use of a sufficiently large mirror bias voltage-a voltage above what is termed the collapse voltage of the device-ensures the mirror will deflect to the closest landing electrodes even in the absence of an address voltage. Therefore, by using a large mirror bias voltage, the address voltages need only be large enough to deflect the mirror slightly so that the mirror bias voltage will drive the mirror to the correct landing electrode.

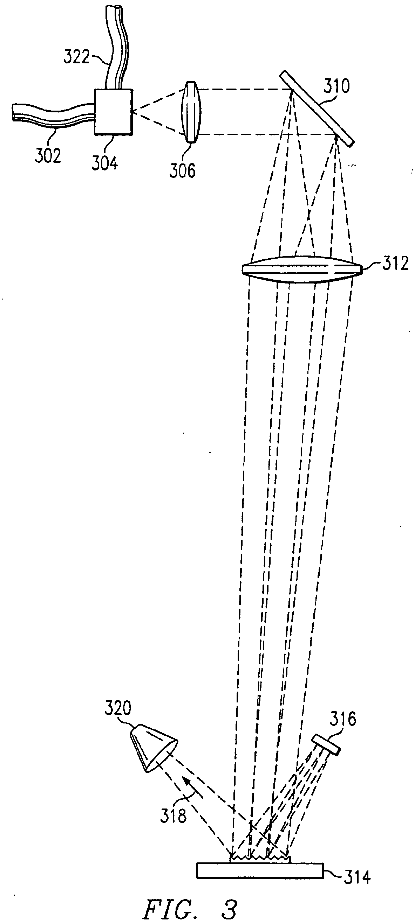

Figure 3 is a schematic view of one embodiment of a wavelength equalizer according to the present invention. In Figure 3, light from an optical fiber or other waveguide 302 passes through a circulator 304 and on to an optic 306. The circulator 304, as will be described below, is operable to separate light beams traveling through the circulator 304 based on the polarization of the light. Any light separation device can be used in place of the circulator 304 shown in Figure 3. After exiting the circulator 304, the light passes through the optic 306. The optic 306 shown in Figure 3 is a collimator lens, but the choice of optic 306 depends on the system.

Wavelength separation device 310 can be any type of device, such as a diffraction grating, prism, or other optical component. The grating spatially separates each wavelength carried by the optical fiber 302. The light then passes through a second optic 312, typically a focussing optic. The second optic 312 directs the light to a micromirror array 314. The input light beam is spatially separated into various sub-beams according to wavelength. While the sub-beams are generally considered single-wavelength, it should be understood that the sub-beams may have a narrow range of wavelengths, so long as the sub-beams are separated into the various channels used in the fiber optic input.

At the micromirror array 314, each sub-beam impinges on several micromirrors. The group of micromirrors on which a single sub-beam impinges is called a sub-array. The number of micromirrors receiving a significant amount of light from the sub-beam depends on the optical components used by the equalizer, and by the intensity of the sub-beam. The micromirrors in a sub-array are used to deflect the light striking them. If the micromirrors deflect light a first direction, the light will travel to a fixed mirror 316, and return to the circulator 304 following the same path it traveled to the fixed mirror 316. If the micromirrors in a sub-array deflect light a second direction 318, the light does not retrace its path. A light trap 320 is often used to control the light traveling along the second direction 318.

Other spatial light modulators-for example, various grating light valves or micromechanical shutter devices-may be used in place of the micromirror array 314. The other spatial light modulators typically include arrays of individually controllable elements that are operable in a first position or state and a second position or state to control the reflectivity, including the direction of reflection, or transmittance of the element. A micromirror array 314, however, is an optimal device since it provides precise adjustment of the power levels, reliable operation, and excellent isolation between the first and second mirror positions.

In retracing its path to the circulator 304. The return light separated by the circulator 304 exits the equalizer through an output fiber or other waveguide 322.

In Figure 3, the strength of each sub-beam returning to and exiting from the circulator is determined by the input strength of the sub-beam, by the number of mirrors turned in the first direction, by the degree to which the mirrors are turned in the first direction, and by the location of the mirrors turned in the first direction within the sub-array. The mirrors typically are operated in a digital mode in which a given mirror is either fully rotated in the first direction, or is fully rotated in the second direction. When the mirrors are operated in an analog mode, the degree to which the mirrors are rotated will determine the degree to which the light striking the mirror is reflected by the fixed mirror and returned to the circulator 304. The mirrors near the center of a sub-array receive more of the sub-beam compared to the mirrors farther from the center.

By controlling the mirrors in a given sub-array, the exit strength of the sub-beam corresponding to that sub-array is altered. Thus, by individually altering the position of the mirrors in each sub-array the strength of each exiting sub-beam is altered. The mirrors typically are positioned to equalize the power between each sub-beam traveling through the input and output fibers, but the various sub-beams may be adjusted to have other power levels.

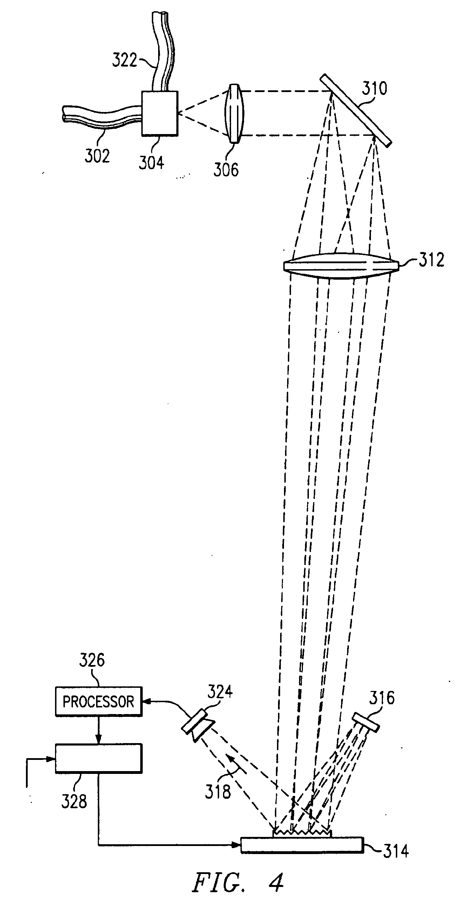

Figure 4 is a schematic view of a second embodiment of a wavelength equalizer according to a second embodiment of the disclosed invention. In Figure 4, light from an optical fiber 302 passes through a circulator 304 and on to an optic 306. Any light separation device can be used in place of the circulator 304 shown in Figure 4. After exiting the circulator 304, the light passes through the optic 306. The optic 306 shown in Figure 4 is a collimator lens, but the choice of optic 306 depends on the system. The light then strikes the wavelength separation device 310.

Wavelength separation device 310 can be any type of device, such as a diffraction grating, prism, or other optical component. The grating spatially separates each wavelength carried by the optical fiber 302. The light then passes through a second optic 312, typically a focussing optic. The second optic 312 directs the light to a micromirror array 314. The input light beam is spatially separated into various sub-beams according to wavelength. While the sub-beams are generally considered single-wavelength, it should be understood that the sub-beams may have a narrow range of wavelengths, so long as the sub-beams are separated into the various channels used in the fiber optic input.

At the micromirror array 314, each sub-beam impinges on a sub-array of micromirrors. The number of micromirrors receiving a significant amount of light from the sub-beam depends on the optical components used by the equalizer, and by the intensity of the sub-beam. The micromirrors in a sub-array are used to deflect the light striking them. If the micromirrors deflect light a first direction, the light will travel to a fixed mirror 316, and return to the circulator 304 following the same path it traveled to the fixed mirror 316. If the micromirrors in a sub-array deflect light a second direction 318, the light is directed to a detector 324.

In retracing its path to the circulator 304, the return light separated by the circulator 304 exits the equalizer through an output fiber 322.

In Figure 4, the strength of each sub-beam returning to and exiting from the circulator is determined by the input strength of the sub-beam, by the number of mirrors turned in the first direction, by the degree to which the mirrors are turned in the first direction, and by the location of the mirrors turned in the first direction within the sub-array. The mirrors typically are operated in a digital mode in which a given mirror is either fully rotated in the first direction, or is fully rotated in the second direction. When the mirrors are operated in an analog mode, the degree to which the mirrors are rotated will determine the degree to which the light striking the mirror is reflected by the fixed mirror and returned to the circulator 304. The mirrors near the center of a sub-array receive more of the sub-beam compared to the mirrors farther from the center.

By controlling the mirrors in a given sub-array, the exit strength of the sub-beam corresponding to that sub-array is altered. Thus, by individually altering the position of the mirrors in each sub-array the strength of each exiting sub-beam is altered. The mirrors typically are positioned to equalize the power between each sub-beam traveling through the input and output fibers, but the various sub-beams may be adjusted to have other power levels.

The detector 324 of Figure 4 allows monitoring of the light dumped out of the return path by the mirror array 314. The detector processor 326 reads the signal from the detector and provides a signal to controller 328. By knowing the number and location of the mirrors from a given sub-array rotated in the second direction, and the strength of the signal received by the detector, the detector controller 328 can determine the input and output strengths of the signal corresponding to that sub-array. The controller 328 determines which mirrors are rotated in the first and second directions so that a given signal has the proper signal strength at the output.

Alternatively, the controller not only receives signals from the detector processor 326, but also from an external source. The external source provides various information including, for purposes of illustration, information about the input signal strength of one or more sub-beams and information of the desired output signal strength for one or more sub-beams. Thus, the external source can indicate that a given sub-beam should have a particular output signal strength suited to its prospective signal path.

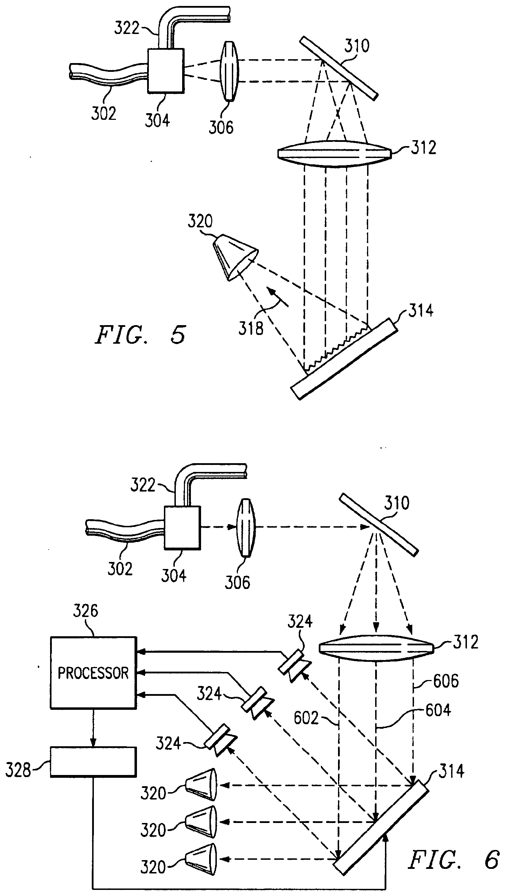

Figure 5 is a schematic view of another embodiment of a wavelength equalizer according to another embodiment of the disclosed invention. The embodiment shown in Figure 5 does not require a fixed mirror, but instead tilts the micromirror array 314 at the proper angle to direct light striking mirrors in a first position along the return path. In Figure 5, as in the prior embodiments, light from an optical fiber 302 passes through a circulator 304 and on to an optic 306. Any light separation device can be used in place of the circulator 304 shown in Figure 5. After exiting the circulator 304, the light passes through the optic 306. The optic 306 shown in Figure 5 is a collimator lens, but the choice of optic 306 depends on the system. The light then strikes a wavelength separation device 310.

Wavelength separation device 310 can be any type of device, such as a diffraction grating, prism, or other optical component. The grating spatially separates each wavelength carried by the optical fiber 302. The light then passes through a second optic 312, typically a focussing optic. The second optic 312 directs the light to a micromirror array 314. The input light beam is spatially separated into various sub-beams according to wavelength. While the sub-beams are generally considered single-wavelength, it should be understood that the sub-beams may have a narrow range of wavelengths, so long as the sub-beams are separated into the various channels used in the fiber optic input.

At the micromirror array 314, each sub-beam impinges on a sub-array of micromirrors. The number of micromirrors receiving a significant amount of light from the sub-beam depends on the optical components used by the equalizer, and by the intensity of the sub-beam. If the micromirrors in a given sub-array are in a first position, the light striking the micromirrors is reflected back to optic 312 and returns to the circulator 304 along the same path it traveled to the micromirror array 314. If the micromirrors in a sub-array deflect light a second direction 318, the light is directed to a light trap 320.

In retracing its path to the circulator 304, the return light separated by the circulator 304 exits the equalizer through an output fiber 322.

In Figure 5, as in the prior embodiments, the strength of each sub-beam returning to and exiting from the circulator is determined by the input strength of the sub-beam, by the number of mirrors turned in the first direction, by the degree to which the mirrors are turned in the first direction, and by the location of the mirrors turned in the first direction within the sub-array. The mirrors typically are operated in a digital mode in which a given mirror is either fully rotated in the first direction, or is fully rotated in the second direction. When the mirrors are operated in an analog mode, the degree to which the mirrors are rotated will determine the degree to which the light striking the mirror is reflected by the fixed mirror and returned to the circulator 304. The mirrors near the center of a sub-array receive more of the sub-beam compared to the mirrors farther from the center.

By controlling the mirrors in a given sub-array, the exit strength of the sub-beam corresponding to that sub-array is altered. Thus, by individually altering the position of the mirrors in each sub-array the strength of each exiting sub-beam is altered. The mirrors typically are positioned to equalize the power between each sub-beam traveling through the input and output fibers, but the various sub-beams may be adjusted to have other power levels.

Figure 6 is a schematic view of another embodiment of a wavelength equalizer according to another embodiment of the disclosed invention. The embodiment shown in Figure 6 does not require a fixed mirror, but instead tilts the micromirror array 314 at the proper angle to direct light striking mirrors in a first position along the return path. In Figure 6, as in the prior embodiments, light from an optical fiber 302 passes through a circulator 304 and on to an optic 306. Any light separation device can be used in place of the circulator 304 shown in Figure 6. After exiting the circulator 304, the light passes through the optic 306. The optic 306 shown in Figure 6 is a collimator lens, but the choice of optic 306 depends on the system. The light then strikes a wavelength separation device 310.

Wavelength separation device 310 can be any type of device, such as a diffraction grating, prism, or other optical component. The grating spatially separates each wavelength carried by the optical fiber 302. The light then passes through a second optic 312, typically a focussing optic. The second optic 312 directs the light to a micromirror array 314. The input light beam is spatially separated into various sub-beams according to wavelength. While the sub-beams are generally considered single-wavelength, it should be understood that the sub-beams may have a narrow range of wavelengths, so long as the sub-beams are separated into the various channels used in the fiber optic input. In Figure 6, each light beam and sub-beam is shown as a single ray. Thus, Figure 6 shows three separate sub-beams after the wavelength separation device.

At the micromirror array 314, each sub-beam impinges on a sub-array of micromirrors. The number of micromirrors receiving a significant amount of light from the sub-beam depends on the optical components used by the equalizer, and by the intensity of the sub-beam. If the micromirrors in a given sub-array are in a first position, the light striking the micromirrors is reflected back to optic 312 and returns to the circulator 304 along the same path it traveled to the micromirror array 314. If the micromirrors in a sub-array deflect light a second direction 318, the light is directed to a light trap 320. If the micromirrors in a third position, typically a flat position parallel with the plane of the micromirror array 314, the light is directed to a detector 324.

In retracing its path to the circulator 304, the return light separated by the circulator 304 exits the equalizer through an output fiber 322.

In Figure 6, as in the prior embodiments, the strength of each sub-beam returning to and exiting from the circulator is determined by the input strength of the sub-beam, by the number of mirrors turned in the first direction, by the degree to which the mirrors are turned in the first direction, and by the location of the mirrors turned in the first direction within the sub-array. The mirrors typically are operated in a digital mode in which a given mirror is either fully rotated in the first direction, or is fully rotated in the second direction. When the mirrors are operated in an analog mode, the degree to which the mirrors are rotated will determine the degree to which the light striking the mirror is reflected by the fixed mirror and returned to the circulator 304. The mirrors near the center of a sub-array receive more of the sub-beam compared to the mirrors farther from the center.

By controlling the mirrors in a given sub-array, the exit strength of the sub-beam corresponding to that sub-array is altered. Thus, by individually altering the position of the mirrors in each sub-array the strength of each exiting sub-beam is altered. The mirrors typically are positioned to equalize the power between each sub-beam traveling through the input and output fibers, but the various sub-beams may be adjusted to have other power levels.

In the embodiments shown in Figures 3, 4, and 5, the use of a digital micromirror meant all of the light not being returned to the circulator 304 was directed to the detector 324. If a weak signal is received, it would be desirable to pass virtually all of the input signal to the output fiber 322. This would result in very little of the input signal being directed to the detector 324. Likewise, if a strong signal is received, it would be desirable to attenuate the signal an more of the strong signal would be directed to the detector 324. Thus, the use of digital micromirrors requires a detector with a very large dynamic range. Analog micromirrors provide the ability to control how much of the light from the mirrors in a second position is directed to the detector 324.

The use of a third micromirror position allows the use of both a detector 324 and a light trap 320. The use of both a detector and a light trap provides the ability to control how much light reaches the light detector independently of how much light is returned to the exit fiber 322. Thus, when a strong signal is received, more of the light removed from the signal is directed to the light traps 320 compared to the case in which a weak signal is received. Likewise, when a strong signal is received, less of the light removed from the signal is directed to the detectors 324 compared to the case in which a weak signal is received.

The detectors 324 of Figure 6 allows the system to monitor the light dumped out of the return path by the mirror array 314. The detector processor 326 reads the signal from the detector and provides a signal to controller 328. By knowing the number and location of the mirrors from a given sub-array in the flat position and the strength of the signal received by the detector, the detector controller 328 can determine the input and output strengths of the signal corresponding to that sub-array. The controller 328 determines which mirrors are rotated in the first, second, and flat directions so that a given signal has the proper signal strength at the output. This configuration allows sequential power monitoring of a DWDM signal with minimal signal perturbation; whereas, in the prior embodiments, the DWDM stream must be momentarily interrupted to provide power monitoring.

Alternatively, the controller not only receives signals from the detector processor 326, but also from an external source. The external source provides various information including, for purposes of illustration, information about the input signal strength of one or more sub-beams and information of the desired output signal strength for one or more sub-beams. Thus, the external source can indicate that a given sub-beam should have a particular output signal strength suited to its prospective signal path.

The embodiment shown in Figure 6 is just one example of the use of a third state or a flat state to enable light to be either sent to a light trap or a detector. The same concept generally is applicable to all of the embodiments of this invention.

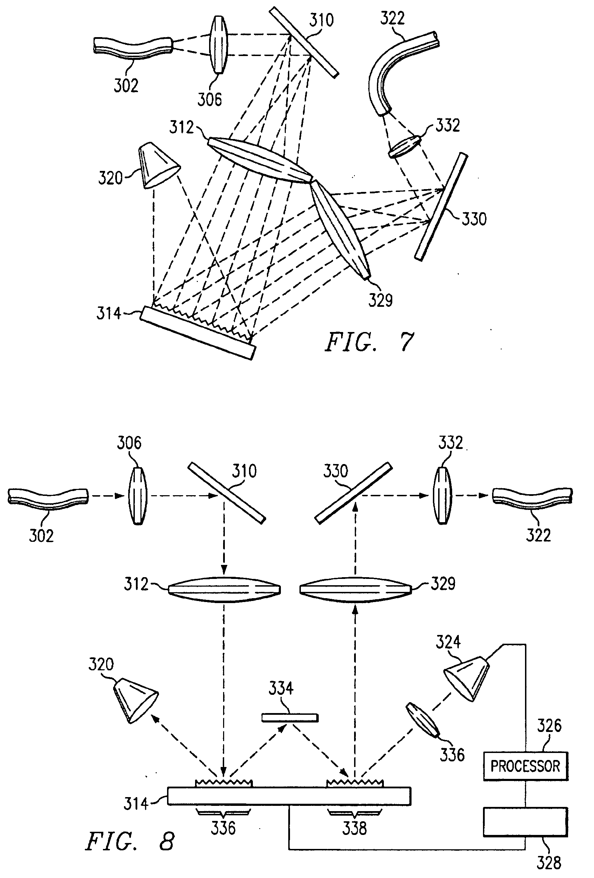

Figure 7 is a schematic view of another embodiment of a wavelength equalizer according to another embodiment of the disclosed invention. The embodiment shown in Figure 7 does not require either a fixed mirror or a circulator, but instead collects the light that would have been sent to the fixed mirror using a third optic 329 and directs it into an output fiber 322.

As in the previous figures, light from input fiber 302 is focused by a first optic 306, typically a collimator, and directed to a first wavelength separation device 310, typically a diffraction grating. The separation device spatially separates each wavelength carried by the optical fiber 302. The light then passes through a second optic 312, typically a focussing optic. The second optic 312 directs the light to a micromirror array 314. The input light beam is spatially separated into various sub-beams according to wavelength. While the sub-beams are generally considered single-wavelength, it should be understood that the sub-beams may have a narrow range of wavelengths, so long as the sub-beams are separated into the various channels used in the fiber optic input.

At the micromirror array 314, each sub-beam impinges on a sub-array of micromirrors. The number of micromirrors receiving a significant amount of light from the sub-beam depends on the optical components used by the equalizer, and by the intensity of the sub-beam. If the micromirrors in a given sub-array are in a first position, the light striking the micromirrors is reflected to the third optic 329. If the micromirrors in a sub-array deflect light a second direction, the light is directed to a light trap 320.

The third optic 329 receives light from the mirrors in the first position and passes the light to a second wavelength separation device such as diffraction grating 330. A single wavelength separation device is sometimes used as both the first and second wavelength separation devices. The light then travels to a fourth optic 332 and is focused by the fourth optic 332 onto the output fiber 322. The embodiment of Figure 7 is more difficult to align, but avoids the use of a circulator, which is an expensive component.

In Figure 7, as in the prior embodiments, the strength of each sub-beam exiting from the output waveguide 322 is determined by the input strength of the sub-beam, by the number of mirrors turned in the first direction, by the degree to which the mirrors are turned in the first direction, and by the location of the mirrors turned in the first direction within the sub-array. The mirrors typically are operated in a digital mode in which a given mirror is either fully rotated in the first direction, or is fully rotated in the second direction. When the mirrors are operated in an analog mode, the degree to which the mirrors are rotated will determine the degree to which the light striking the mirror is reflected by the fixed mirror to the output waveguide 322. The mirrors near the center of a sub-array receive more of the sub-beam compared to the mirrors farther from the center.

By controlling the mirrors in a given sub-array, the exit strength of the sub-beam corresponding to that sub-array is altered. Thus, by individually altering the position of the mirrors in each sub-array the strength of each exiting sub-beam is altered. The mirrors typically are positioned to equalize the power between each sub-beam traveling through the input and output fibers, but the various sub-beams may be adjusted to have other power levels.

The optical layout shown in Figure 7 is also useful in combination with the detector, detector processor, and controller of previous embodiments. Using a detector in place of the light dump 320 of Figure 7 allows the system to monitor the light dumped out of the return path by the mirror array 314. A detector processor reads the signal from the detector and provides a signal to controller. By knowing the number and location of the mirrors from a given sub-array in the flat position and the strength of the signal received by the detector, the detector controller can determine the input and output strengths of the signal corresponding to that sub-array. The controller determines which mirrors are rotated in the first and second directions so that a given signal has the proper signal strength at the output.

Alternatively, the controller not only receives signals from the detector processor, but also from an external source. The external source provides various information including, for purposes of illustration, information about the input signal strength of one or more sub-beams and information of the desired output signal strength for one or more sub-beams. Thus, the external source can indicate that a given sub-beam should have a particular output signal strength suited to its prospective signal path.

Figure 8 is a schematic view of another embodiment of a wavelength equalizer according to another embodiment of the disclosed invention. As in Figure 7, the embodiment of Figure 8 collects the equalized output light using a third optic 329 and directs it into an output fiber 322.

As in the previous figures, light from input fiber 302 is focused by a first optic 306, typically a collimator, and directed to a first wavelength separation device 310, typically a diffraction grating. The separation device spatially separates each wavelength carried by the optical fiber 302. The light then passes through a second optic 312, typically a focussing optic. The second optic 312 directs the light to a micromirror array 314. The input light beam is spatially separated by the wavelength separation device 310 into various sub-beams according to wavelength. While the sub-beams are generally considered single-wavelength, it should be understood that the sub-beams may have a narrow range of wavelengths, so long as the sub-beams are separated into the various channels used in the fiber optic input.

At the micromirror array 314, each sub-beam impinges on a sub-array of micromirrors. The number of micromirrors receiving a significant amount of light from the sub-beam depends on the optical components used by the equalizer, and by the intensity of the sub-beam. If the micromirrors in a given sub-array are in a first position, the light striking the micromirrors is reflected to a retro-reflector 334. If the micromirrors in a sub-array deflect light a second direction, the light is directed to a light trap 320.

The retro-reflector 334 can be a reflective portion on the inner surface of the micromirror package window, or a separate reflector positioned to reflect light from a first region 336 of the micromirror array 314 to a second region 338 of the micromirror array. Figure 8 shows the operation of the wavelength equalizer for a single sub-beam of the input signal. As in previous embodiments, the wavelength separation device 310 of Figure 8 separates the input light beam into several sub-beams. The various other sub-beams are not shown, but generally are in planes parallel to the plane of Figure 8. Therefore, the retro-reflector and first and second regions of the micromirror array generally extend out of the plane of Figure 8.

Light reaching the second region 338 of micromirrors in the micromirror array 314 of Figure 8 is reflected in a direction dependent on the position of the mirrors in the second region. If the light reaches a mirror in a first position, it is reflected to the third optic 329. If the light reaches a mirror in a second position, it is reflected to detector 324. Since the micromirrors in the first and second regions for each wavelength act in concert to determine the strength of the signal, they can be thought of as a single sub-array even though they typically are spatially separated from each other.

The third optic 329 receives light from the mirrors in the first position and passes the light to a second wavelength separation device such as diffraction grating 330. A single wavelength separation device is sometimes used as both the first and second wavelength separation devices. The light then travels to a fourth optic 332 and is focused by the fourth optic 332 onto the output fiber 322.

In Figure 8, as in the prior embodiments, the strength of each sub-beam returning to the output waveguide 322 is determined by the input strength of the sub-beam, by the number of mirrors in each of the first and second regions turned in the first direction, by the degree to which the mirrors are turned in the first direction, and by the location of the mirrors turned in the first direction within the sub-array. The mirrors typically are operated in a digital mode in which a given mirror is either fully rotated in the first direction, or is fully rotated in the second direction. When the mirrors are operated in an analog mode, the degree to which the mirrors are rotated will determine the degree to which the light striking the mirror is reflected by the fixed mirror to the output waveguide 322. The mirrors near the center of a sub-array receive more of the sub-beam compared to the mirrors farther from the center.

By controlling the mirrors in the first and second regions of the micromirror array, the exit strength of the sub-beam corresponding to that sub-array is altered. Thus, by individually altering the position of the mirrors in each sub-array the strength of each exiting sub-beam is altered. The mirrors typically are positioned to equalize the power between each sub-beam traveling through the input and output fibers, but the various sub-beams may be adjusted to have other power levels.

Although the location of the light trap 320 and detector 324 could be reversed, the optical layout shown in Figure 8 allows the strength of the signal to be equalized prior to being measured by the detector 324. This enables the use of a detector with a much more limited dynamic range compared to the embodiments that direct all of the light subtracted from the output signal to the detector. In Figure 8, the signal is equalized by the first region of micromirrors, which sends light subtracted from the output signal to a light trap 320. The second region of the micromirror array then subtracts a small portion of the remaining output light and directs the small portion to the detector 324. A detector processor reads the signal from the detector and provides a signal to controller. By knowing the number and location of the mirrors from the second region of a sub-array in the second position and the strength of the signal received by the detector, the detector controller can determine the output strength of the signal corresponding to that sub-array. The controller then determines which mirrors in the first region to rotate in the first and second directions so that a given signal has the proper signal strength at the output.

Alternatively, the controller not only receives signals from the detector processor, but also from an external source. The external source provides various information including, for purposes of illustration, information about the input signal strength of one or more sub-beams and information of the desired output signal strength for one or more sub-beams. Thus, the external source can indicate that a given sub-beam should have a particular output signal strength suited to its prospective signal path.

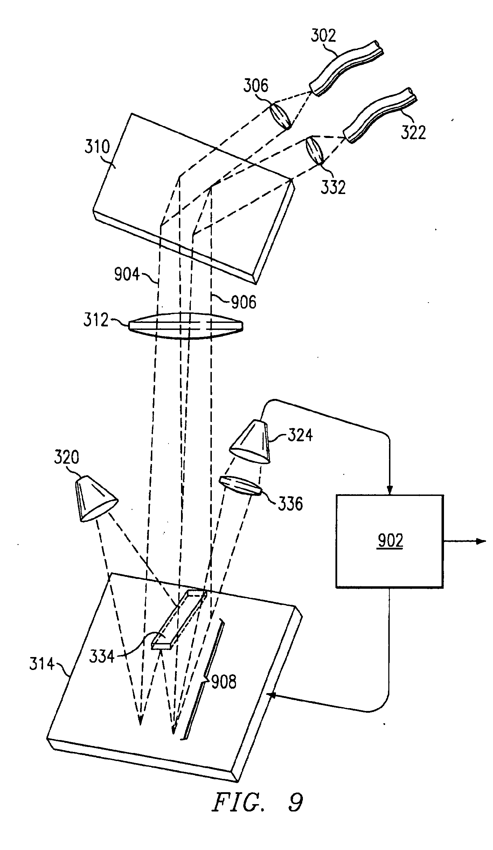

Figure 9 is a schematic view of another embodiment of a wavelength equalizer according to another embodiment of the disclosed invention. In Figure 9, a single optic 312 is used to focus both the input sub-beams 904 and the output sub-beams 906. The wavelength separation device 310 is also used to combine the modulated output sub-beams.

As in the previous figures, light from input fiber 302 is focused by a first optic 306, typically a collimator, and directed to a first wavelength separation device 310, typically a diffraction grating. The separation device spatially separates each wavelength carried by the optical fiber 302. The light then passes through a second optic 312, typically a focussing optic. The second optic 312 directs the light to a micromirror array 314. The input light beam is spatially separated by the wavelength separation device 310 into various sub-beams according to wavelength. While the sub-beams are generally considered single-wavelength, it should be understood that the sub-beams may have a narrow range of wavelengths, so long as the sub-beams are separated into the various channels used in the fiber optic input.

At the micromirror array 314, each sub-beam impinges on a sub-array of micromirrors. The number of micromirrors receiving a significant amount of light from the sub-beam depends on the optical components used by the equalizer, and by the intensity of the sub-beam. If the micromirrors in a given sub-array are in a first position, the light striking the micromirrors is reflected to a retro-reflector 334. If the micromirrors in a sub-array deflect light a second direction, the light is directed to a light trap 320.

The retro-reflector 334 can be a reflective portion on the inner surface of the micromirror package window, or a separate reflector positioned to reflect light from a first region of the micromirror array 314 to a second region of the micromirror array. As in previous embodiments, the wavelength separation device 310 of Figure 8 separates the input light beam into several sub-beams. Figure 9 shows the operation of the wavelength equalizer for a range of sub-beams separated in a first direction. The output sub-beams 906 are separated and strike the second region of the micromirror array 314 along region 908.

Light reaching the second region 908 of micromirrors in the micromirror array 314 of Figure 9 is reflected in a direction dependent on the position of the mirrors in the second region. If the light reaches a mirror in a first position, it is reflected to the second optic 312. If the light reaches a mirror in a second position, it is reflected to detector 324. Since the micromirrors in the first and second regions for each wavelength act in concert to determine the strength of the signal, they can be thought of as a single sub-array even though they typically are spatially separated from each other.

The second optic 312 receives light from the mirrors in the first position and passes the light to the wavelength separation device 310, typically a diffraction grating. The light then travels to a third optic 332 and is focused by the third optic 332 onto the output fiber 322.

In Figure 9, as in the prior embodiments, the strength of each sub-beam reaching the output waveguide 322 is determined by the input strength of the sub-beam, by the number of mirrors in each of the first and second regions turned in the first direction, by the degree to which the mirrors are turned in the first direction, and by the location of the mirrors turned in the first direction within the sub-array. The mirrors typically are operated in a digital mode in which a given mirror is either fully rotated in the first direction, or is fully rotated in the second direction. When the mirrors are operated in an analog mode, the degree to which the mirrors are rotated will determine the degree to which the light striking the mirror is reflected to the output waveguide 322. The mirrors near the center of a sub-array receive more of the sub-beam compared to the mirrors farther from the center.

By controlling the mirrors in the first and second regions of the micromirror array, the exit strength of the sub-beam corresponding to that sub-array is altered. Thus, by individually altering the position of the mirrors in each sub-array the strength of each exiting sub-beam is altered. The mirrors typically are positioned to equalize the power between each sub-beam traveling through the input and output fibers, but the various sub-beams may be adjusted to have other power levels.

Although the location of the light trap 320 and detector 324 could be reversed, the optical layout shown in Figure 9 allows the strength of the signal to be equalized prior to being measured by the detector 324. This enables the use of a detector with a much more limited dynamic range compared to the embodiments that direct all of the light subtracted from the output signal to the detector. In Figure 9, the signal is equalized by the first region of micromirrors, which sends light subtracted from the output signal to a light trap 320. The second region of the micromirror array then subtracts a small portion of the remaining output light and directs the small portion to the detector 324. A controller 902 reads the signal from the detector and provides a control signal to the modulator 314. By knowing the number and location of the mirrors from the second region of a sub-array in the second position and the strength of the signal received by the detector, the controller can determine the output strength of the signal corresponding to that sub-array. The controller then determines which mirrors in the first region to rotate in the first and second directions so that a given signal has the proper signal strength at the output.

Alternatively, the controller not only receives signals from the detector, but also from an external source such as a network. The external source provides various information including, for purposes of illustration, information about the input signal strength of one or more sub-beams and information of the desired output signal strength for one or more sub-beams. Thus, the external source can indicate that a given sub-beam should have a particular output signal strength suited to its prospective signal path. The controller may also provide signals to the external network to communicate information about the signal strength of the various sub-beams.

Thus, although there has been disclosed to this point a particular embodiment for a wavelength equalizer and method thereof, it is not intended that such specific references be considered as limitations upon the scope of this invention except insofar as set forth in the following claims. Furthermore, having described the invention in connection with certain specific embodiments thereof, it is to be understood that further modifications may now suggest themselves to those skilled in the art, it is intended to cover all such modifications.

## Claims

1. A wavelength equalizer comprising:
an input waveguide for providing a beam of light along a first light path;
a wavelength separation device for dividing said beam of light into sub-beams; and
a spatial light modulator in the path of said sub-beam, a sub-array of elements of said spatial light modulator operable between a first and second position, said first position directing light in said sub-beam to an output waveguide, and said second position excluding said light in said sub-beam from said output waveguide.

2. The wavelength equalizer of Claim 1, further comprising:
a fixed mirror for receiving light from said spatial light modulator elements in said first position and reflecting such light to said elements in said first position; and
a light separation device for separating input light traveling a first direction from light traveling to said output waveguide.

3. The wavelength equalizer of Claim 1 or Claim 2, further comprising:
a first optic for either focusing or collimating said beam of light prior to said wavelength separation device.

4. The wavelength equalizer of Claim 3, wherein said sub-beams directed to said output waveguide pass through said first optic after being directed by said spatial light modulator.

5. The wavelength equalizer of any of Claims 1-4, further comprising:
a detector for measuring light from said elements in said second position.

6. The wavelength equalizer of any of Claims 1-5, further comprising:
a second optic for directing light from said wavelength separation device to said spatial light modulator.

7. The wavelength equalizer of any of Claims 1-6, further comprising:
a wavelength combiner for recombining said sub-beams into an output beam.

8. The wavelength equalizer of Claim 7, wherein said wavelength combiner is said wavelength separation device.

9. The wavelength equalizer of any of Claims 1-8, wherein said elements in said first sub-array are divided into at least two regions, said equalizer further comprising:
a retro-reflector for receiving light reflected by elements in a first region of said sub-array and directing incident light to elements in a second region of said sub-array.

10. The wavelength equalizer of Claim 9, further comprising:
a detector for detecting light from elements in said second region deflected in a second position.

11. A method of equalizing a plurality of components of an optical input signal, said method comprising:
separating said components;
directing each said component to a sub-array of a micromirror array;
positioning micromirrors in each said sub-array such that micromirrors in a first position direct incident light to an output fiber and micromirrors in a second position do not; and
combining said sub-beams into an output beam of light.

12. The method of Claim 11, further comprising:
separating said input beam and said output beam using a light separation device.

13. The method of Claim 11, further comprising:
separating said input beam and said output beam using an optical circulator.

14. The method of any of Claims 11-13, further comprising:
detecting at least a portion of said light from said mirrors in said second position.

15. The method of Claim 14, wherein positioning said micromirrors is determined by the amount of light detected from said mirrors in said second position.
